(19) Europäisches Patentamt
European Patent Office
Office européen des brevets

(11) **EP 1 146 019 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
***C03C 3/093*** *(2006.01)*

(21) Anmeldenummer: **01102750.5**

(22) Anmeldetag: **08.02.2001**

(54) **Thermisch hochbelastbares Glas für Lampenkolben**

Thermally highly resistant glass for lamp envelopes

Verre à haute résistance thermique pour enveloppes des lampes

(84) Benannte Vertragsstaaten:
**AT BE CH CY DK ES FI FR GB GR IE IT LI LU MC NL PT SE**

(30) Priorität: **12.02.2000 DE 10006305**

(43) Veröffentlichungstag der Anmeldung:
**17.10.2001 Patentblatt 2001/42**

(73) Patentinhaber: **Schott AG**
**55122 Mainz (DE)**

(72) Erfinder: **Kass, Christof**
**95643 Tirschenreuth (DE)**

(56) Entgegenhaltungen:
**DE-C- 19 747 355      DE-C- 19 758 481**
**US-A- 3 496 401        US-A- 4 163 171**

**Beschreibung**

Die Erfindung betrifft ein Erdalkalialuminosilicatglas für Molybdän-Komponenten aufweisende Lampenkolben mit Kolbentemperaturen von mehr als 650 ˚C.

Die Erfindung betrifft auch die Verwendung des Glases.

An die Gläser für Hochtemperaturlampen, worunter man in der Regel Lampen mit Kolbentemperaturen ab 550 ˚C versteht, werden hohe Anforderungen gestellt.

Bei den für diese Verwendung in Frage kommenden Gläsern handelt es sich um Erdalkalialumino(boro)silicatgläser. Die Gläser müssen im wesentlichen alkalioxidfrei sein, da Alkaliionen den regenerativen Halogenkreislauf der Lampe stören. Im Betrieb der Lampe bildet sich nämlich aus dem Wolframdampf von der Wendel und der Halogen-Inertgas-Mischung ein Gleichgewicht zwischen Bildung und Zerfall von Wolfram-Halogeniden. Dabei findet die Zerfallsreaktion bei höheren Temperaturen als die Bildungsreaktion statt, so daß sich das Wolfram wieder auf der Wendel abscheidet. Wird dieser Kreislauf durch verunreinigende Komponenten wie beispielsweise Alkaliionen gestört, scheidet sich das Wolfram statt auf der Wendel auf der Glaskolbeninnenseite als schwarz glänzender störender Belag ab.

In der Patentliteratur existieren bereits zahlreiche Schriften, die Gläser für Glühlampen betreffen. Jedoch sind diese Gläser mit den verschiedensten Nachteilen behaftet.

US 3,978,362 beschreibt Glühlampen mit Lampenkolben aus hoch CaOhaltigem (14 - 21 Gew.-%) Glas. Dagegen beschreibt DE 37 36 887 C2 Glühlampen aus $B_2O_3$-freien Glaskolben mit geringen CaO-Gehalten (4 - 8 Gew.-%).

Gläser mit hohen CaO-Gehalten haben jedoch den Nachteil, daß sie sehr zur Kristallisation neigen, während Gläser mit wenig CaO hohe Verarbeitungstemperaturen aufweisen.

DE 29 30 249 C2 betrifft die Verwendung von bestimmten Glaszusammensetzungen als Kolbenmaterial, in denen das Gewichtsverhältnis CaO : BaO zwischen 0,28 und 0,43 beträgt. Diese Gläser sollen eine verbesserte Beständigkeit gegen das sogenannte Nachschäumen ("reboil") aufweisen. Beim Nachschäumen handelt es sich um die Tendenz des Glases, beim Wiederbearbeiten mit einer Flamme oder beim Wiedererhitzen viele kleine Blasen von eingeschlossenen Gasen zu bilden. Dadurch wird die Lichtdurchlässigkeit verschlechtert und werden die wiedererhitzten Bereiche geschwächt. Nachteilig an den Gläsern mit hohen BaO-Anteilen sind hohe Schmelz- und Verarbeitungstemperaturen, die zu einer stärkeren Beanspruchung des Wannenmaterials führen und mit hohen Energiekosten verbunden sind.

US 4,060,423 beschreibt $B_2O_3$- und $ZrO_2$-freie Gläser für Mo-Einschmelzungen, bei denen das Gewichtsverhältnis $Al_2O_3$ / (BaO + CaO) im Bereich von 0,6 bis 1 liegt.

DE-AS-27 33 169 betrifft Gläser für Dichtungen mit Molybdän, die $B_2O_3$-frei und $ZrO_2$-frei sind.

Auch US 4,298,388 beschreibt $B_2O_3$-freie Gläser für Glas-Mo-Verschmelzungen. Die Gläser weisen hohe CaO-Anteile (bis zu 19,2 Gew.-%) auf. BaO ist nur fakultative Komponente mit maximal 6,5 Gew.-%.

Die $B_2O_3$-freien Gläser besitzen zwar, zumindest wenn sie wenig oder kein MgO enthalten, eine ausreichende thermische Stabilität, sichtbar beispielsweise an hohen Erweichungstemperaturen und hohen unteren Entspannungstemperaturen, und lassen prinzipiell auch Kolbentemperaturen bis 700 ˚C zu, sie haben jedoch den Nachteil, daß sie bei hohen Temperaturen geschmolzen werden müssen. Die damit verbundene starke Korrosion der Wannensteine und des Gewölbematerials führt partiell zu schlechten Glasqualitäten und zu einer Zunahme des Verunreinigungsgrades, was ein solches Glas für die Verwendung als Kolbenmaterial nicht gut geeignet sein läßt, da zunehmende Verunreinigungen zu verstärkter Schwarzfärbung der Lampe führen können.

Es sind auch Gläser für Glühlampenkolben bekannt, die große Mengen an $B_2O_3$ benötigen:

So enthalten die Gläser für Einschmelzungen mit Molybdän aus US 3,310,413 4 bis 9 Gew.-% $B_2O_3$. Auch die Dichtungs- bzw. Kolbengläser aus DE 33 05 587 A1 benötigen 3 bis 7 Gew.-% $B_2O_3$ und außerdem hohe Anteile an BaO (bis zu 16 Gew.-%). Solche hohen Gehalte an $B_2O_3$, insbesondere in Kombination mit MgO, senken die Viskositätswerte, so daß diese Gläser für Halogenlampen mit Kolbentemperaturen von mehr als 650 ˚C, beispielsweise von ca. 700 ˚C, nicht geeignet sind. Die geringe thermische Belastbarkeit der Gläser führt zu Ausbeulungen des Lampenkolbens, die so weit fortschreiten können, daß der Kolben explodiert. Ein Beispiel für ein solches Glas ist das kommerziell erhältliche Glas V1 der Zusammensetzung (in Gew.-%) 56,8 $SiO_2$; 16,4 $Al_2O_3$; 4,7 $B_2O_3$; 5,8 MgO; 7,8 CaO; 8,0 BaO mit einer oberen Kühltemperatur OKP von 721 ˚C.

Die US-Patentschrift US 3,496,401 beschreibt Glühlampen aus einem Erdalkalialuminosilicatglas mit einem Höchstgehalt von 0,1 Gew.-% an Alkalioxiden, insbesondere aus Gläsern aus $SiO_2$ , $Al_2O_3$ ,10-25 Gew.-% Erdalkalioxiden, wobei ihre Anteile nicht weiter spezifiziert sind, und 0 - 10 Gew.-% $B_2O_3$. Die Ausführungsbeispiele sind entweder $B_2O_3$-frei oder enthalten wenigstens 4 Gew.-% $B_2O_3$. Der maximal zulässige Alkalioxidgehalt ist für die hohen Kolbentemperaturen von ca. 700 ˚C zu hoch und wird bei Betrieb der Lampe zur Schwärzung der Kolbeninnenfläche führen.

Bei hohen Leistungen der Lampe steigt die Kolbentemperatur an. Da mit zunehmender Temperatur die Ionenbeweglichkeit im Glas zunimmt und Diffusionsprozesse leichter ablaufen, reichen bereits geringere Mengen an Alkaliionen aus, um den Halogenkreislauf zu stören.

Wasser bzw. die Wasserstoffionen wirken sich, analog zu den Alkaliionen, ebenfalls störend auf den Halogenkreislauf aus. Daher wird auch in US 4,163,171 eine Glühlampe beschrieben, deren Glas nicht nur "im wesentlichen alkalifrei" ist, sondern auch nur weniger als 0,03 Gew.-% Wasser enthalten darf.

US 5,489,558 beschreibt Gläser, die insbesondere für die Verwendung in Flachglasdisplays geeignet sind. Diese Gläser enthalten entweder viel $Al_2O_3$ ($\geq$ 18 Gew.-%) bei relativ geringen $SiO_2$-Gehalten ($\leq$ 55 Gew.-%) oder wenig $Al_2O_3$ ($\leq$ 13 Gew.-%) bei höheren SiO-Gehalten ($\geq$ 55 Gew.-%). Die Gläser sind speziell an a- und poly-Silicium und weniger an Mo angepaßte Gläser. Ihr Viskositätsverhalten ist besonders geeignet für die Ziehtechnologie von Flachglasscheiben und weniger für die von Rohren für den Lampenbau. Analoges gilt für die Gläser aus EP 0 672 629 A2 und US 5,508,237.

Eine weitere Anforderung an ein Lampenkolbenglas für Lampenkolben, die Molybdän-Komponenten als Elektroden- oder Zuleitungsmaterial enthalten, ist die thermische Dehnung des Glases: Sie muß an Molybdän angepaßt sein, damit eine dichte spannungsfreie Verschmelzung zwischen dem Metall und dem Glas erzielt wird.

Eine weitere Anforderung an ein für die Verwendung als Kolbenglas für Lampenkolben geeignetes Glas ist seine Eignung für den Rohrzug. Dafür muß es ausreichend kristallisationsstabil sein bzw. müssen entstehende Entglasungskristalle leicht beseitigbar sein.

Aus den Patentschriften DE 197 47 355 C1 und DE 197 58 481 C1 sind bereits Gläser bekannt, die gut geeignet sind für Lampenkolben mit Kolbentemperaturen oberhalb 650 °C.

Trotz sehr guter Entglasungsstabilität läßt sich jedoch, wie bei allen Aluminosilicatgläsern, beim Rohrzug eine Kristallbildung nicht immer vollständig vermeiden. Die dabei entstehenden Anorthitkristalle bleiben an der Oberfläche der Rohrzug-Nadel haften und führen zu einer streifigen inneren Glasoberfläche oder lösen sich von der Nadel ab und haften an der Innenseite des Rohrs. Beide Effekte führen zu Ausbeuteminderung und Produktionsausfällen, so auch die nötig werdende aufwendige Entfernung des schnell wachsenden Anorthits.

Es ist nun Aufgabe der Erfindung, ein Glas zu finden, das thermisch hochbelastbar ist und die genannten Anforderungen, insbesondere bezüglich der Entglasungsstabilität, an ein Material für Lampenkolben mit Kolbentemperaturen von mehr als 650 °C erfüllt.

Diese Aufgabe wird durch das im Hauptanspruch beschriebene Glas gelöst. Dieses Erdalkalialuminosilicatglas besitzt ein sehr ausgewogenes Verhältnis von Bestandteilen, von denen die meisten nur in relativ engen Grenzen variieren, um alle gewünschten Eigenschaften zu vereinen.

Das erfindungsgemäße Glas enthält > 58 bis 62 Gew.-% $SiO_2$. Bei niedrigeren Gehalten würde die thermische Ausdehnung zu groß, bei höheren Gehalten würde sie zu gering. In beiden Fällen wäre das Glas nicht an Mo angepaßt, was undichte Halogenlampen zur Folge hätte. Bevorzugt ist der Bereich zwischen 59 und 61 Gew.-% $SiO_2$.

Das Glas enthält 14 bis 16 Gew.-% $Al_2O_3$. Auch Abweichungen von diesem Bereich würden zu Dehnungsfehlanpassungen führen. Niedrigere Gehalte würden außerdem die Transformationstemperatur $T_g$ herabsetzen, was die thermische Belastbarkeit verringern würde. Bevorzugt sind Gehalte zwischen 14,5 und 15,7 Gew.-%.

Weiter enthält das Glas geringe Mengen an $B_2O_3$, und zwar 0,2 bis 1 Gew.-%. Bevorzugt sind 0,3 bis 0,8 Gew.-%. In diesen geringen Mengen wirkt das Boroxid bereits vorteilhaft schmelzerleichternd, ohne dabei die benötigte hohe Transformationstemperatur $T_g$ zu sehr herabzusetzen.

Es erleichtert auch die Löslichkeit eines weiteren Bestandteiles des Glases, nämlich des $ZrO_2$, das im Glas mit 1 bis 1,8 Gew.-% vorhanden ist. Gerade in alkalifreien Aluminosilicatgläsern wäre nämlich sonst die Löslichkeit von $ZrO_2$ sehr begrenzt, und würden $ZrO_2$-Steinchen und -Schlieren zu einer schlechten Glasqualität führen. Der $ZrO_2$-Gehalt im Glas ist wesentlich, um bei den eher niedrigen $Al_2O_3$- und CaO-Gehalten und eher hohen BaO-Gehalten die gewünschte hohe Transformationstemperatur $T_g$ von > 775 °C zu erreichen.

Das Glas enthält Erdalkalioxide in bestimmten Mengen und in einem bestimmten Verhältnis zueinander: BaO liegt mit 10 bis 12 Gew.-% (vorzugsweise > 10 - 11,7 Gew.-%) und CaO mit 9 bis 13 Gew.-% (vorzugsweise > 9 bis 12 Gew.-%) im Glas vor. Weiter kann das Glas bis zu 4 Gew.-%, vorzugsweise bis zu 3 Gew.-% SrO enthalten. SrO wirkt ähnlich wie BaO viskositätserhöhend.

Das Gewichtsverhältnis zwischen der Summe aus CaO und SrO auf der einen Seite und BaO auf der anderen Seite ((CaO+SrO)/BaO) soll zwischen 0,8 und 1,3 betragen. Dieses Verhältnis ist wesentlich für die Entglasungseigenschaften des Glases. Das Glas kann zusätzlich bis zu < 1 Gew.-% MgO enthalten. Zusätze von MgO speziell zu einem CaO und BaO enthaltenden Aluminosilicatglas können zu einer Verfestigung des Glasnetzwerkes beitragen, denn MgO als sogenanntes "Zwischenoxid" mit $Mg^{2+}$ als Kation höherer Feldstärke als $Ca^{2+}$ und $Ba^{2+}$ kann ähnlich wie $Al_2O_3$ und $SiO_2$ Netzwerkbildnerfunktion übernehmen. Vorzugsweise enthält das Glas 0,3 bis 0,8 Gew.-% MgO. Es ist bevorzugt, daß auch beim Vorliegen von MgO im Glas das Gewichtsverhältnis (CaO + SrO + MgO)/BaO maximal 1,3 beträgt.

In den thermisch hochbelasteten Lampen ist die Halogenfüllung im allgemeinen ein bromid- und chloridhaltiges Gas (z. B. Dichlorbrommethan), und Verunreinigungen aus dem Glas und aus der Wendel wie beispielsweise Alkaliionen reagieren mit dem Bromid bzw. Chlorid, hier zu Alkalibromiden und -chloriden, die sich als weißer Niederschlag auf der Glasinnenseite des Kolbens abscheiden. Dabei verringert sich die Halogenkonzentration in der Lampe, und der regenerative Halogenkreislauf wird gestört, bzw. bricht zusammen.

Dem erfindungsgemäßen Glas können nun bis zu 1,5 Gew.-% -$Cl^-$ zugegeben werden, was aufgrund der Flüchtigkeit der eingesetzten Verbindungen (z.B. $BaCl_2 \cdot 2H_2O$) bis zu 0,1 Gew.-% im fertigen Glas entspricht. Dieser Chlorid-Zusatz soll verhindern, daß Chlorid aus dem Kreislauf weggefangen wird, und so auch die Schwarzfärbung durch Wolframabscheidungen verhindern. Weiter hat das zugesetzte Chlorid bei der Herstellung des Glases Läuterwirkung, wodurch eine sehr gute Glasqualität erzielt wird. Auch setzt es die Reboiltemperatur herab. Bevorzugt ist, daß das Glas wenigstens 0,03 Gew.-% Chlorid enthält, besonders bevorzugt sind wenigstens 0,05 Gew.-% $Cl^-$. Das Glas kann auch statt Chlorid oder zusätzlich Bromid enthalten, das ebenfalls den Halogenid-Kreislauf stabilisiert, auf das jedoch aufgrund des höheren Preises der Verbindungen und ihrer hohen Flüchtigkeit meist verzichtet wird.

$CeO_2$ bewirkt im Glas eine Verschiebung der UV-Absorptionskante zu längeren Wellenlängen. Außerdem wirkt es als Läutermittel. Es hat sich gezeigt, daß $CeO_2$ die störenden Halogenidablagerungen auf der Innenseite des Kolbens verringert, und so wird auch die Schwärzung beim Lampenbetrieb verringert sein. Das Glas kann dazu auch bis zu 0,3 Gew.-% $CeO_2$ enthalten. Bei höheren Gehalten käme es zu einer störenden Gelbfärbung des Glases. Bevorzugt ist, daß wenigstens 0,04 Gew.-% im Glas vorhanden sind.

Das Glas kann auch noch weitere übliche Läutermittel in für Halogenlampengläsern üblichen Mengen enthalten.

Weiter kann das Glas noch bis zu 0,5 Gew.-% $TiO_2$ enthalten. Durch diese Komponente wird die UV-Kante in geringerem Maße als durch $CeO_2$ in den längerwelligen Spektralbereich verschoben. Bei höheren Gehalten würde durch Reaktion von $TiO_2$ mit Eisenverunreinigungen zu einer gefärbten Eisentitanatverbindung das Glas bräunlich erscheinen. Damit ist es als Lampenglas nicht mehr geeignet.

Wie bereits erwähnt, sind auch der Gehalt an Alkalioxiden und an Wasser von großer Bedeutung.

Die Anforderungen an einen möglichst niedrigen Gehalt sind um so höher, je höher die Betriebstemperaturen der Lampe sind. Bei den erfindungsgemäßen Gläsern, die für die Verwendung als Kolbenmaterial für Lampenkolben mit Kolbentemperaturen von ca. 700 ˚C geeignet sind, sollen der Alkalioxidgehalt auf weniger als 0,03 Gew.-% und der Wassergehalt auf weniger als 0,02 Gew.-% beschränkt bleiben. Dadurch wird, auch aufgrund der gesamten ausgewogenen Zusammensetzung, insbesondere der Erdalkaliverhältnisse, auch bei den genannten hohen Temperaturen und nach längerem Betrieb der Lampe die Schwarzfärbung verringert.

Der Alkaligehalt kann niedrig gehalten werden durch die Verwendung alkaliarmer Rohstoffe sowie durch saubere Bedingungen bei der Gemengebereitung und im Einlegeteil der Schmelzwanne.

Auch der Wassergehalt kann durch die Auswahl der Rohstoffe und die Schmelzbedingungen ausreichend niedrig gehalten werden.

**Beispiele:**

Zur Herstellung der Beispielgläser wurden von den Rohstoffen für die oxidischen Komponenten, wie z. B. Quarzsand, Aluminiumoxid, Magnesium-, Calcium- und Bariumcarbonat, sowie Zirconsand jeweils alkaliarme Varianten eingesetzt. Weiterhin wurden ggf. Ceroxid und Bariumchlorid zugegeben. Das gut homogenisierte Gemenge wurde im Labor in einem Pt/Rh-Tiegel bei 1620 ˚C geschmolzen, geläutert und homogenisiert. Anschließend wurde das Glas in einer Laborrohrziehanlage senkrecht abgezogen. Die Gläser waren frei von störenden Kriställchen. Um dennoch eine Kristallisation herbeizuführen, wurden Probekörper hergestellt, die bei 1050 ˚C 10 h getempert wurden. Danach wurden die entglasten Oberflächen präpariert und mittels Röntgenbeugung auf die Art der Entglasungskristalle untersucht. Mit dieser Behandlung kann auf die Kristallbildung beim Rohrzug im Produktionsmaßstab, die dort eher als im Labormaßstab auftritt, rückgeschlossen werden.

Die Tabelle 1 zeigt vier Beispiele erfindungsgemäßer Gläser (A) sowie zwei Vergleichsbeispiele (V) mit ihren Zusammensetzungen (in Gew.-% auf Oxidbasis) und ihren wesentlichen Eigenschaften:

Neben der Transformationstemperatur ($T_g$) und der Temperatur bei einer Viskosität von $10^4$ dPas ($V_A$) ist auch die Reboiltemperatur angegeben. Hierbei handelt es sich um die Temperatur, bei der eine bei Raumtemperatur visuell blasenfreie Glasprobe bei Temperaturerhöhung an der Grenzfläche zu einem Metall (Probenhalter, Mo) plötzlich Blasenbildung zeigt. Je höher diese Reboiltemperatur liegt, desto weniger neigt das Glas bei der Verschmelzung mit Mo zur Blasenbildung. Beim Vergleichsbeispiel V1 ist anstelle von $T_g$ der Obere Kühlpunkt (OKP) angegeben.

Weiter sind der thermische Ausdehnungskoeffizient $\alpha_{20/300}$ angegeben sowie die bei der oben genannten Behandlung entstandenen Entglasungskristalle.

**Tabelle 1:**

| Ausführungsbeispiele (A) und Vergleichsbeispiele (V): Zusammensetzungen der Gläser (in Gew.-%) und ihre wesentlichen Eigenschaften | | | | | | |
|---|---|---|---|---|---|---|
| | A1 | A2 | A3 | A4 | V1 | V2 |
| $SiO_2$ | 60,1 | 60,1 | 60,1 | 59, 5 | 56, 8 | 60,6 |

(fortgesetzt)

| Ausführungsbeispiele (A) und Vergleichsbeispiele (V): Zusammensetzungen der Gläser (in Gew.-%) und ihre wesentlichen Eigenschaften | | | | | | |
|---|---|---|---|---|---|---|
| | A1 | A2 | A3 | A4 | V1 | V2 |
| $Al_2O_3$ | 15,2 | 15,2 | 15,2 | 15,2 | 16,4 | 16,5 |
| $B_2O_3$ | 0,7 | 0,6 | 0,5 | 0,8 | 4,7 | 0,3 |
| MgO | 0,7 | 0,4 | 0,4 | 0,4 | 5,8 | - |
| CaO | 11,4 | 11,4 | 11,4 | 8,4 | 7,8 | 13,5 |
| SrO | - | - | - | 3, 0 | - | - |
| BaO | 10,5 | 11,0 | 11,0 | 11,3 | 8,0 | 8,0 |
| $ZrO_2$ | 1,4 | 1,3 | 1,3 | 1,3 | - | 1,0 |
| $CeO_2$ | - | - | - | - | - | 0,1 |
| $Cl^-$ | 0,03 | 0,03 | 0,08 | 0,04 | - | - |
| $Na_2O$ | 0,016 | 0,02 | 0,017 | 0,02 | 0,028 | 0,022 |
| $K_2O$ | 0,004 | 0,010 | 0,005 | 0,006 | 0,018 | 0,007 |
| $H_2O$ [Gew.-%] | 0,009 | 0,003 | 0,007 | 0,008 | 0,017 | 0,007 |
| $\alpha_{20/300}$ [$10^{-6}$/K] | 4,66 | 4,71 | 4,68 | 4,73 | 4,52 | 4,59 |
| $T_g$[˚C] | 787 | 788 | 793 | 785 | 721 (OKP) | 802 |
| $V_A$ [˚C] | 1301 | 1295 | n.b. | 1305 | n.b. | 1306 |
| Reboiltemp. [˚C] | 1495 | 1503 | 1511 | 1500 | n.b. | 1515 |
| Entglasungskristall | C | C | C | C | n.b. | A |
| n.b.= nicht bestimmt A= Anorthit; C= Cristobalit | | | | | | |

Im Unterschied zu den erfindungsgemäßen Gläsern (siehe Ausführungsbeispiele (Cristobalit)) entsteht beim Vergleichsbeispiel V2 als Entglasungskristall Anorthit.

Die erfindungsgemäßen Gläser besitzen mit thermischen Ausdehnungskoeffizienten $\alpha_{20/300}$ zwischen 4,4 · $10^{-6}$/K und 4,85 · $10^{-6}$/K thermische Dehnungen, die sie gut mit Mo verschmelzbar sein lassen.

Ihre Transformationstemperaturen $T_g$ von mehr als 775 ˚C zeigen ihre ausreichend hohe thermische Belastbarkeit.

Ihre Eignung für die Verwendung als Kolbenmaterial für Lampenkolben mit Kolbentemperaturen von ca. 700 ˚C zeigt sich auch im Lampentest.

Ihre Beständigkeit gegen das Nachschäumen wird durch Reboiltemperaturen von wenigstens 1450 ˚C dokumentiert.

Ihre gute Verarbeitbarkeit zeigt sich in den vergleichsweise niedrigen Verarbeitungstemperaturen $V_A$ von maximal 1305 ˚C. Durch die dadurch bei der Verarbeitung möglich gemachten niedrigen Temperaturen werden die Verarbeitungswerkzeuge wenig angegriffen.

Ihre Entglasungsstabilität ist sehr hoch. Gegebenenfalls sich dennoch bildende Entglasungskristalle sind Cristobalit-Kristalle, die eine geringere Streifigkeit des Glases und einen geringeren Produktionsausfall bewirken als bei der Entstehung von Anorthit, da sie zum einen langsamer wachsen und zum anderen leichter entfernbar sind.

**Patentansprüche**

1. Erdalkalialuminosilicatglas für Molybdän-Komponenten aufweisende Lampenkolben mit Kolbentemperaturen von mehr als 650 ˚C,
   **gekennzeichnet durch**
   folgende Zusammensetzung (in Gew.-% auf Oxidbasis):

| | |
|---|---|
| $SiO_2$ | > 58 - 62 |
| $Al_2O_3$ | 14 - 16 |
| $B_2O_3$ | 0,2 - 1 |
| MgO | 0 - < 1 |
| CaO | 9 - 13 |
| SrO | 0 - 4 |
| BaO | 10 - 12 |
| $ZrO_2$ | 1 - 1,8 |
| $CeO_2$ | 0 - 0,3 |
| $TiO_2$ | 0 - 0,5 |
| $Cl^-$ | 0 - 0,1 |
| mit | |

$$\frac{CaO + SrO}{BaO} \qquad 0,8 - 1,3$$

und einem Alkalioxidgehalt von < 0,03 Gew.-%
und einem Wassergehalt von < 0,02 Gew.-%
sowie ggf weitere Läutermittel in üblichen Mengen.

**2.** Glas nach Anspruch 1,
   **gekennzeichnet durch**
   folgende Zusammensetzung (in Gew.-% auf Oxidbasis):

| | |
|---|---|
| $SiO_2$ | 59 - 61 |
| $Al_2O_3$ | 14,5 - 15,7 |
| $B_2O_3$ | 0,3 - 0,8 |
| MgO | 0,3 - 0,8 |
| CaO | > 9 - 12 |
| SrO | 0 - 3 |
| BaO | > 10 - 11,7 |
| $ZrO_2$ | 1,2 - 1,8 |
| $CeO_2$ | 0 - 0,3 |
| $TiO_2$ | 0 - 0,5 |
| $Cl^-$ | 0 - 0,1 |
| mit | |

$$\frac{CaO + SrO}{BaO} \qquad 1 - 1,3$$

und einem Alkalioxidgehalt von < 0,03 Gew.-%
und einem Wassergehalt von < 0,02 Gew.-%
sowie ggf. weitere Läutermittel in üblichen Mengen.

**3.** Glas nach Anspruch 1 oder 2,
   **dadurch gekennzeichnet,**
   **daß** das Gewichtsverhältnis (CaO + SrO + MgO)/BaO ≤ 1,3 beträgt.

**4.** Glas nach wenigstens einem der Ansprüche 1 bis 3,
   **dadurch gekennzeichnet,**
   **daß** es wenigstens 0,03 Gew.-% $Cl^-$ enthält.

5. Glas nach wenigstens einem der Ansprüche 1 bis 4,
   **dadurch gekennzeichnet,**
   **daß** es wenigstens 0,04 Gew.-% $CeO_2$ enthält.

6. Glas nach wenigstens einem der Ansprüche 1 bis 5,
   mit einem thermischen Ausdehnungskoeffizienten $\alpha_{20/300}$ zwischen $4,4 \cdot 10^{-6}/K$ und $4,85 \cdot 10^{-6}/K$, einer Transformationstemperatur Tg von mehr als 775 ˚C, einer Verarbeitungstemperatur $V_A$ von höchstens 1305 ˚C und einer Reboiltemperatur von wenigstens 1450 ˚C.

7. Verwendung eines Glases nach wenigstens einem der Ansprüch 1 bis 6 als Kolbenmaterial für Lampenkolben mit Kolbentemperaturen von mehr als 650 ˚C.

**Claims**

1. Aluminosilicate glass which contains alkaline earth metals for lamp bulbs which have molybdenum components and bulb temperatures of more than 650˚C, **characterized by** the following composition (in % by weight, based on oxide):

   | | |
   |---|---|
   | $SiO_2$ | > 58 - 62 |
   | $Al_2O_3$ | 14 - 16 |
   | $B_2O_3$ | 0.2 - 1 |
   | MgO | 0 - < 1 |
   | CaO | 9 - 13 |
   | SrO | 0 - 4 |
   | BaO | 10 - 12 |
   | $ZrO_2$ | 1 - 1.8 |
   | $CeO_2$ | 0 - 0.3 |
   | $TiO_2$ | 0 - 0.5 |
   | $Cl^-$ | 0 - 0.1 |

   where

   $$\frac{CaO + SrO}{BaO} \quad 0.8 - 1.3$$

   and an alkaline metal oxide content of < 0.03% by weight
   and a water content of < 0.02% by weight
   and if appropriate further refining agents in customary amounts.

2. Glass according to Claim 1, **characterized by** the following composition (in % by weight, based on oxide):

   | | |
   |---|---|
   | $SiO_2$ | 59 - 61 |
   | $Al_2O_3$ | 14.5 - 15.7 |
   | $B_2O_3$ | 0.3 - 0.8 |
   | MgO | 0.3 - 0.8 |
   | CaO | > 9 - 12 |
   | SrO | 0 - 3 |
   | BaO | > 10 - 11.7 |
   | $ZrO_2$ | 1.2 - 1.8 |
   | $CeO_2$ | 0 - 0.3 |
   | $TiO_2$ | 0 - 0.5 |
   | $Cl^-$ | 0 - 0.1 |

   where

(continued)

$$\frac{CaO + SrO}{BaO} \quad 1 - 1.3$$

and an alkali metal oxide content of < 0.03% by weight
and a water content of < 0.02% by weight
and if appropriate further refining agents in customary amounts.

3. Glass according to Claim 1 or 2, **characterized in that** the weight ratio of (CaO + SrO + MgO)/BaO is $\leq$ 1.3.

4. Glass according to at least one of Claims 1 to 3, **characterized in that** it contains at least 0.03% by weight of Cl⁻.

5. Glass according to at least one of Claims 1 to 4, **characterized in that** it contains at least 0.04% by weight of $CeO_2$.

6. Glass according to at least one of Claims 1 to 5, having a coefficient of thermal expansion $\alpha_{20/300}$ of between 4.4 · $10^{-6}$/K and 4.85 · $10^{-6}$/K, a transformation temperature Tg of more than 775˚C, a working point $V_A$ of not more than 1305˚C and a reboil temperature of at least 1450˚C.

7. Use of a glass according to at least one of Claims 1 to 6 as bulb material for lamp bulbs with bulb temperatures of more than 650˚C.

**Revendications**

1. Verre en aluminosilicate de métal alcalino-terreux pour des ampoules de lampe qui présentent un composant en molybdène et dont la température de l'ampoule est supérieure à 650˚C, **caractérisé par** la composition suivante (en % en poids sur base des oxydes) :

| | |
|---|---|
| $SiO_2$ | > 58 - 62 |
| $Al_2O_3$ | 14 - 16 |
| $B_2O_3$ | 0 , 2 - 1 |
| MgO | 0 - < 1 |
| CaO | 9 - 13 |
| SrO | 0 - 4 |
| BaO | 10 - 12 |
| $ZrO_2$ | 1 - 1 , 8 |
| $CeO_2$ | 0 - 0 , 3 |
| $TiO_2$ | 0 - 0,5 |
| Cl⁻ | 0 - 0,1 |
| avec | |

$$\frac{CaO + SrO}{BaO} \quad 0,8 - 1,3$$

et une teneur en oxyde de métal alcalin < 0,03 % en poids,
une teneur en eau < 0,02 % en poids
ainsi qu'éventuellement d'autres agents d'affinage en les quantités habituelles.

2. Verre selon la revendication 1, **caractérisé par** la composition suivante (en % en poids sur base des oxydes) :

| | |
|---|---|
| $SiO_2$ | 59 - 61 |
| $Al_2O_3$ | 14,5 - 15,7 |

(suite)

| | |
|---|---|
| $B_2O_3$ | 0 , 3 - 0,8 |
| MgO | 0,3 - 0,8 |
| CaO | > 9 - 12 |
| SrO | 0 - 3 |
| BaO | > 10 - 11,7 |
| $ZrO_2$ | 1,2 - 1,8 |
| $CeO_2$ | 0 - 0 , 3 |
| $TiO_2$ | 0 - 0,5 |
| Cl⁻ | 0 - 0,1 |
| avec | |

$$\frac{CaO + SrO}{BaO} \quad 1 - 1,3$$

et une teneur en oxyde de métal alcalin < 0,03 % en poids,
une teneur en eau < 0,02 % en poids
ainsi qu'éventuellement d'autres agents d'affinage en les quantités habituelles.

**3.** Verre selon les revendications 1 ou 2, **caractérisé en ce que** le rapport pondéral (CaO + SrO + MgO)/BaO $\leq$ 1,3.

**4.** Verre selon au moins l'un des revendications 1 à 3, **caractérisé en ce qu'**il contient au moins 0,03 % en poids de Cl⁻.

**5.** Verre selon au moins l'un des revendications 1 à 4, **caractérisé en ce qu'**il contient au moins 0,04 % en poids de $CeO_2$.

**6.** Verre selon au moins l'un des revendications 1 à 5, dont le coefficient de dilatation thermique $\alpha_{20}/_{300}$ est compris entre 4,4 $*$ 10⁻⁶/K et 4,85 $*$ 10⁻⁶/K, la température de transformation vitreuse Tg supérieure à 775°C, la température de traitement $V_A$ d'au plus 1 305°C et la température de rebouillage d'au moins 1 450°C.

**7.** Utilisation d'un verre selon au moins l'une des revendications 1 à 6 comme matériau d'ampoule pour des ampoules de lampe dont la température de l'ampoule est supérieure à 650°C.